# EUROPEAN PATENT SPECIFICATION

(11) **EP 4 066 648 B1**
(45) Date of publication and mention of the grant of the patent: **12.06.2024**
(21) Application number: 22165736.4
(22) Date of filing: 31.03.2022
(51) Int. Cl.: A23C 20/00

(54) **CHEESE ANALOGUE FOOD PRODUCT SUITABLE FOR BEING MOLDED**
KÄSEANALOGNAHRUNGSMITTELPRODUKT ZUM FORMEN
PRODUIT ALIMENTAIRE ANALOGUE DE FROMAGE APTE À ÊTRE MOULÉ

(30) Priority: 31.03.2021 EP 21166419
(43) Date of publication of application: 05.10.2022
(73) Proprietor: Fuji Oil Company, Limited, Izumisano-shi, Osaka 598-8540 (JP); Fuji Oil Europe, 9042 Gent (BE)
(72) Inventor: MIZUNO, Hiroshi, Osaka, 598-8540 (JP); YANAGISAWA, Masanobu, Osaka, 598-8540 (JP); ECHIM, Camelia, 9940 Doornzele (Evergem) (BE); VERBEECK, Sabrina, 9130 Kieldrecht (BE)
(74) Representative: Gevers Patents

(56) References cited:
- EP-A1- 2 789 243
- EP-A1- 3 603 408
- WO-A1-2014/129230
- US-A- 5 807 601
- US-A1- 2014 154 388

## Description

### Technical field

The present invention relates to a cheese analogue food product having a hard texture and a good mouth feel, with a low content of saturated fatty acid content.

### Background of the invention

Efforts to achieve the SDGs (Sustainable Development Goals) are worldwide underway.
In particular, due to global population growth, animal resources and water resources are predicted to be in short supply in the future, and there is a growing sense of social crisis regarding global issues such as "food resource shortage" and "environmental destruction".

Attempts are being made to solve these global issues such as "food resource shortage" and "environmental destruction" that occur with population growth through plant-based food materials.

Cheese is a type of dairy product that is produced from milk, which is an animal resource collected from cows, buffaloes, sheep, goats, yaks, etc., through processes such as coagulation and fermentation. It is often used in combination with other foods, and, furthermore, it is used in various dishes such as pizza, pasta, gratin, risotto, and cheese fondue.

On the other hand, health issues such as obesity and diabetes due to the increase in consumption of animal based products have gotten a lot of attention in the last years, and there is a growing interest in improving health through eating habits.

Also, for various reasons, the number of people who need to eat only vegetarian diets or voluntarily choose to eat vegetarian diets is increasing.

Under these circumstances, the interest in food made from plant resources is increasing.

In order to obtain a cheese analogue food product with the desired hardness, the physical characteristics of the product are determined by its composition, that is, the amount and properties of fats and oils, other raw materials in the product, and the process that is used for manufacturing the product, accordingly.

It is generally known that processes such as emulsification, heating, and tempering can affect the physical characteristics of the product. Liquid oils have a low saturated fatty acids (SAFA), but said liquid oils have the disadvantage of having no structure at ambient temperature. It is generally known in the art that hydrogenation of liquid oils and fats, also called "hardening", is a widely used technique to provide hard physical characteristics to fats and oils . However, hydrogenation results in the conversion of unsaturated fatty acids to saturated fatty acids (SAFA) as well as the conversion of cis unsaturated fatty acids to their corresponding trans isomers (TFA).

In the case of partial hydrogenation there are TFA present in the varying range depending on the degree of hydrogenation. In the case of complete hydrogenation, the TFA are present only in a very limited amount but the corresponding SAFA content is very high.

Naturally occurring TFA are produced by the gut bacteria of ruminant animals (R-TFA) and found in small amounts in the food products from these animals (for example, the meat and milk products from cattle, sheep, and goats).

There is a distinction made between the naturally occurring trans fatty acids (R-TFA) and the industrially produced trans fatty acids (TFA).

Although high amounts of SAFA and/or TFA are recommended for functional reasons to obtain the desired physical properties, however in terms of nutrition, their consumption should be limited since it increases the risk of occurring heart diseases. Various public institutions, such as for instance WHO, publish recommended upper limits for daily intake of SAFA and TFA.

Therefore, a cheese analogue food product with reduced content of saturated fatty acids (SAFA) and trans fatty acids (TFA) is highly desired.

In general, nutritionists, dietitians and government organizations have recommended dietary patterns that limit the consumption of saturated and trans fats and promote the consumption of unsaturated fats. The relationship between saturated fats and trans fats with increased bad (low-density lipoprotein) cholesterol levels and decreased good (high-density lipoprotein) cholesterol levels is the rationale that led to these recommendations. Depending on the types of fatty acids, there is an effect on the formation of LDL cholesterol. A distinction is made between (1) bad types namely the B-type of fatty acid residues: C14:0 and C16:0 which have an increasing effect on the formation of LDL cholesterol, (2) moderate types, namely the M- type of fatty acid residues: C12:0 which have a moderate effect on the formation of LDL cholesterol, (3) neutral types, namely N-type of fatty acid residues: C8:0, C10:0, C18:0 which have a neutral effect have on the formation of LDL cholesterol, (4) lowering types, namely D-type of fatty acid residues: mono- and polyunsaturated fatty acids have a lowering effect on the formation of LDL cholesterol. Trans fatty acids lower "good" high-density lipoprotein (HDL) cholesterol and increase "bad" low-density lipoprotein (LDL) cholesterol.

Several cheese analogue food products have been studied.

Among them, the [Patent Document 1] JP2004008191 describes foods which are made from soy milk, casein, and vegetable fats and oils and the analysis values for hardness are described, but they are not hard enough to be molded into a shape suitable for shreds and cooking.

[Patent Document 2] EP3313192 describes an imitation cheese product with improved melting properties achieved by using combination of 3 % to 8 % fractionated vegetable oils (e.g. very hard palm oil fraction) and 6 % to 15 % liquid vegetable oils, in combination with 4 % to 15 % corn derived food starch and 2 % to 12 % potato derived food starch. It was found that due to the combined use of interesterified/hydrogenated vegetable oils with starch, the imitation cheese product did not melt or melt poorly.

[Patent Document 3] EP2789243 describes an imitation cheese product, characterized by having a good mechanical processing adaptability such as having a good shreddability, by being easily melted by heat treatment, and while maintaining a soft edible texture even after it is cooled down. These desired properties of the product are achieved by combining 8 % to 15 % of acid-treated starch with 20 % to 40 % of a fat-and-oil, which is characterized by a solid fat content (SFC) of 55 wt. % or higher at 10 °C and an SFC of 30 wt. % or higher at 20 °C, and an open-tube melting point of 25 - 45 °C; and a protein in an amount of 10 wt. % or less. The fat-and-oil contains P2O triglycerides in an amount of 8 % or higher.

On the market there are several cheese analogue food products available which are of the semi-hard/hard types, but which are powdery or chewy and less stretchable when melting.

In view of all the above; there is still a need for a cheese analogue food product that has a low SAFA content while still possessing the desired hard texture and still having a good mouthfeel.

### [Summary of Invention]

The inventors have now surprisingly found that it is possible to obtain cheese analogue food products that meet the above-mentioned needs.

It is thus an object of the present invention to provide a cheese analogue food product comprising, based on the total weight of the cheese analogue food product
a) from 16 to 35 percentage by weight (wt. %) of one or more starches
b) from 10 to 40 wt. % of a glyceride composition, and
c) less than 10 wt. % of proteins

wherein the glyceride composition comprises, based on the total weight of the glyceride composition:
   d) less than 70 wt. % of saturated fatty acid residues (SAFA),
   e) less than 5 wt. % of trans fatty acid residues (TFA);
and wherein the glyceride composition has
   f) a solid fat content (SFC) at 20 °C from 5 to 50 wt. %, the SFC value being measured according to the standard IUPAC (International Union of Pure and Applied Chemistry) 2.150 a method, and
wherein the cheese analogue food product is substantially free of animal-derived fats and oils, natural cheese and/or processed cheese, and
wherein the cheese analogue food product has, based on the total weight of the cheese analogue food product,
   g) a saturated fatty acid residues (SAFA) from 2.5 to 11.5 wt. %.

It is further object of the present invention to provide a molded cheese analogue food product comprising, based on the total weight of the molded cheese analogue food product
a) from 16 to 35 percentage by weight (wt. %) of one or more starches
b) from 10 to 40 wt. % of a glyceride composition, and
c) less than 10 wt. % of proteins

wherein the glyceride composition comprises, based on the total weight of the glyceride composition:
   d) less than 70 wt. % of saturated fatty acid residues (SAFA),
   e) less than 5 wt. % of trans fatty acid residues (TFA);
and wherein the glyceride composition has
   f) a solid fat content (SFC) at 20 °C from 5 to 50 by wt. %, the SFC value being measured according to the standard IUPAC (International Union of Pure and Applied Chemistry) 2.150 a method, and
wherein the molded cheese analogue food product is substantially free of animal-derived fats and oils, natural cheese and/or processed cheese, and
wherein the molded cheese analogue food product has, based on the total weight of the molded cheese analogue food product,
   g) a saturated fatty acid residues (SAFA) from 2.5 to 11.5 wt. %
   h) a hardness of more than 300 g/19.6 mm² as measured at 5 °C by a rheometer (a circular plunger with a diameter of 5 mm, and a table speed of 50 mm/min, Hudo Industries Ltd., Japan).

### [Detailed description of the invention]

Within the scope of the present invention, the term "cheese analogue food product" is intended to refer to a foodstuff made from one or more non-dairy products.

Within the scope of the present invention, the term "cheese analogue food product suitable for molding" is intended to refer to a foodstuff made from non-dairy products which has the required texture being able to be molded.

The term cheese analogue food product, imitation cheese, cheese alternatives, cheese replacement, non-dairy cheese can be used interchangeable.

The cheese analogue food product suitable for being molded of the present invention can also contain a small amount (i.e. less than 10 wt. %, based on the total weight of the cheese analogue food product) of milk fat derived from butter, fresh cream, etc. as enhancers of the flavor of the cheese analogue food product.

If desired, natural cheese and/or processed cheese can be comprised in the cheese analogue food product of the present invention, but in amounts smaller than 10 wt. %, based on the total weight of the cheese analogue food product, which allows the cheese analogue food product to further mimic the hard texture and mouthfeel of said natural cheese and/or processed cheese to a greater extent. Examples of such natural cheese and/or processed cheese notably include cheddar, Gouda, and parmesan types.

The cheese analogue food product of the present invention is substantially free of animal-derived fats and oils, natural cheese and/or processed cheese.

For the purpose of the present invention, the expression "substantially free of animal-derived fats and oils, natural cheese and/or processed cheese" means that the content of animal-derived fats and oils, natural cheese and/or processed cheese, relative to the total weight of the cheese analogue food product, is less than 10 wt. %.

The glyceride composition comprised in the cheese analogue food product of the present invention may comprise monoglycerides and/or diglycerides, but these will typically be present in less amounts than the triglycerides.

In certain embodiments of the present invention, the glyceride composition comprises the diglycerides in an amount of up to 15 wt. %, preferably up to 10 wt. %, more preferably up to 6 wt. %, based on the total weight of the glyceride composition.

The low levels of SAFA, based on the total weight of the cheese analogue food product, being from 2.5 to 11.5 wt. % provides a healthy nutritional profile to the cheese analogue food product suitable for molding of the present invention.

According to a preferred embodiment of the present invention, the cheese analogue food product has, based on the total weight of the cheese analogue food product, a SAFA content from 2.5 to 10.5 wt. %, preferably from 2.5 to 10.0 wt. %, more preferably from 2.5 to 9.5 wt. %, even more preferably from 4.5 to 10.0 wt. %, most preferably from 4.5 to 9.5 wt. %.

According to a preferred embodiment of the present invention, the cheese analogue food product comprises, based on the total weight of the cheese analogue food product, the glyceride composition in an amount from 10 to 40 wt. %, preferably from 10 to 35 wt. %, more preferably from 10 to 30 wt. %, even more preferably from 15 to 30 wt. %, most preferably from 20 to 30 wt. %.

In certain embodiments of the present invention, the SAFA content in the glyceride composition of the cheese analogue food product is equal to or less than 65 wt. %, preferably equal to or less than 55 wt. %, more preferably equal to or less than 45 wt. %, most preferably equal to or less than 40 wt. %, based on the total weight of the glyceride composition.

In certain embodiments of the present invention, the SAFA content in the glyceride composition of the cheese analogue food product is from 15 to 70 wt. %, preferably from 15 to 60 wt. %, more preferably from 15 to 50 wt. %, even more preferably from 15 to 45 wt. %, most preferably from 15 to 40 wt. %, based on the total weight of the glyceride composition.

In certain embodiments of the present invention, the TFA content in the glyceride composition of the cheese analogue food product is equal to or less than 4.5 wt. %, preferably equal to or less than 4 wt. %, more preferably equal to or less than 3 wt. %, even more preferably equal to or less than 2 wt. %, most preferably equal to or less than 1 wt. %, based on the total weight of the glyceride composition.

As said above, the glyceride composition of the cheese analogue food product of the present invention, has a solid fat content (SFC) at 20 °C from 5 to 50 wt. %, preferably from 15 to 45 wt. %, more preferably from 20 to 45 wt. %, based on the total weight of the glyceride composition, the SFC value being measured according to the standard IUPAC (International Union of Pure and Applied Chemistry) 2,150 a method.

According to certain embodiments of the present invention, the glyceride composition of the cheese analogue food product comprises C16:0 fatty acid residues in an amount of less than 30.0 wt. %, preferably less than 25 wt. %, more preferably less than 20 wt. %, even more preferably less than 15 wt. %, most preferably less than 10 wt. %, based on the total weight of the glyceride composition.

According to certain embodiments of the present invention, the glyceride composition of the cheese analogue food product comprises C8:0 and/or C10:0 and/or C18:0 fatty acid residues. Advantageously, the total content of C8:0 + C10:0 + C18:0 fatty acid residues is more than 3.5 wt. %, preferably more than 5.0 wt. %, more preferably more than 10.0 wt. %, based on the total weight of the glyceride composition.

According to certain embodiments of the present invention, the glyceride composition of the cheese analogue food product comprises PUFA fatty acid residues in an amount of more than 3.5 wt. %, preferably more than 5.0 wt. %, based on the total weight of the glyceride composition.

In certain embodiments of the present invention, the total starch content of the cheese analogue food product is from 19 to 35 wt. %, preferably from 19 to 30 wt. %, more preferably from 19 to 25 wt. %, based on the total weight of the cheese analogue food product.

Examples of starches notably include pea, potato and sweet potato, tapioca, corn, rice, wheat, in a non-modified form and/or in a modified form such as physically, chemically, enzymatically modified or by using other greener modification processes.

Examples of modified starches notably include acid treated starches, phosphorylated starches, pregelatinized starches, and hydroxypropylated starches.

In certain embodiments of the present invention, the one or more starches comprises at least one acid treated starch or a combination of at least one acid treated starch and at least one hydroxypropyl modified starch.

Advantageously, the content of the at least one hydroxypropyl modified starch is less or equal than 8 wt. %, preferably less or equal than 5 wt. %, more preferably less or equal than 3 wt. %, based on the total weight of cheese analogue food product.

In certain embodiments of the cheese analogue food product of the present invention, the one or more starches consists of a combination of at least one acid treated starch and at least one hydroxypropyl modified starch. Advantageously, the content of the at least one hydroxypropyl modified starch is less or equal than 8 wt. %, preferably less or equal than 5 wt. %, more preferably less or equal than 3 wt. %, based on the total weight of cheese analogue food product.

In certain embodiments of the cheese analogue food product of the present invention, the one or more starches consists of one or more acid treated starches and the content of the one or more acid treated starches in the cheese analogue food product of the present invention is advantageously from 19 to 35 wt. %, preferably from 19 to 30 wt. %, more preferably from 19 to 22 wt. %, based on the total weight of cheese analogue food product.

Preferably, the acid treated starches are selected from the group consisting of pea acid treated starch, potato acid treated starch, and tapioca acid treated starch.

Preferably, the hydroxypropylated starches are selected among tapioca hydroxypropylated starch, or rice hydroxypropylated starch, or a mixture thereof.

In certain embodiments of the cheese analogue food product of the present invention, the pea acid treated starch is used in combination with potato acid treated starch or tapioca acid treated starch and the amount of pea acid treated starch is more than 8 wt. %, preferably more than 10 wt. %, based on the total weight of cheese analogue food product.

In certain embodiments of the cheese analogue food product of the present invention, the pea acid treated starch is used in combination with potato acid treated starch or tapioca acid treated starch, and tapioca hydroxypropyl starch and the amount of pea acid treated starch is more than 8 wt. %, preferably more than 10 wt. %, based on the total weight of cheese analogue food product.

The Inventors has found that the cheese analogue food product of the present invention, as described above, can be subjected to known molding processing steps known in the art of cheese molding manufacturing methods thereby forming a molded cheese analogue food product.

As known processing steps, mention may be notably made of (pre-)emulsification, homogenization, heat sterilization, and cooling.

Another aspect of the present invention is also the molded cheese analogue food product, as described above.

The molded cheese analogue food product of the present invention, as detailed above, is further characterized by having a hardness of more or equal than 300 g/19.6 mm² as measured at 5 °C by a rheometer (a circular plunger with a diameter of 5 mm, and a table speed of 50 mm/min, Hudo Industries Ltd., JAPAN), preferably more or equal than 400 g/19.6 mm², more preferably more or equal than 600 g/19.6 mm², most preferably more or equal than 700 g/19.6 mm².

According to a preferred embodiment, the molded cheese analogue food product of the present invention is characterized by having a hardness from 300 to 2000 g/19.6 mm² as measured at 5 °C by a rheometer (a circular plunger with a diameter of 5 mm, and a table speed of 50 mm/min, Hudo Industries Ltd., JAPAN), preferably from 400 to 2000 g/19.6 mm², more preferably from 600 to 2000 g/19.6 mm², most preferably from 700 to 2000 g/19.6 mm².

This molded cheese analogue food product of the present invention possesses due to its hardness similar features when compared to known cheese products having that hardness. This being said, the molded cheese analogue food product of the present invention can be subjected to further processing steps known in the art of processing cheese. Examples of such processing steps notably include cutting, splitting, mixing, crushing, slicing, dicing, stripping, shredding, and powdering.

### (Fat and oil)

According to certain preferred embodiments of the present invention, the glyceride composition comprised in the cheese analogue food product of the present invention, in particular in the molded cheese analogue food product, comprises one or more edible fats or oils chosen among rapeseed oil and its varieties, soybean oil, sunflower oil and its varieties, cottonseed oil, peanut oil, hazelnut oil, rice bran oil, corn oil, safflower oil, linseed oil, hempseed oil, grapeseed oil, sea buckthorn oil, walnut oil, olive oil, kapoc oil, sesame oil, almond oil, avocado oil etc. evening primrose oil, shea butter, sal fat, enzymatically prepared fats, allanblackia seed oil, illipe butter, mango fat, kokum fat, cacao butter, coconut oil, palm and palm kernel oil. The oils and fats may include single or blended oils and fats, or processed oils and fats such as hydrogenated, fractionated, interesterified (chemically or enzymatically) and/or combined processing.

The Inventors have surprisingly found that the fats and oils, as detailed above, comprised in the glyceride composition of the cheese analogue food product of the present invention, in particular in the molded cheese analogue food product, can form a better crystal network at the above mentioned content of the glyceride composition of the cheese analogue food product of the present invention.

The cheese analogue food product of the present invention, in particular the molded cheese analogue food product of the present invention, is in general an oil-in-water emulsion.

Within the context of the present invention, it is understood that water can be added to the cheese analogue food product, in particular the molded cheese analogue food product, and/or water can already be present in the various existing ingredients that make up the cheese analogue food product, in particular the molded cheese analogue food product.

### (Non-starch carbohydrates)

The cheese analogue food product of the present invention, in particular the molded cheese analogue food product of the present invention, may further comprise non starch carbohydrates.

Examples of non-starch carbohydrates notably include maltodextrin, dextrose, sucrose, lactose, maltose, combinations thereof.

### (Protein)

As said, the cheese analogue food product according to the present invention, in particular the molded cheese analogue food product, comprises less than 10 wt. % of proteins, preferably less than 8 wt. %, based on the total weight of the cheese analogue food product, in particular the molded cheese analogue food product.

Within the context of the present invention, it is understood that proteins are known in the art of cheese products and may refer to proteins derived from vegetable origin, proteins derived from animal origin, or mixtures thereof.

Examples of proteins notably include soybean protein, corn protein, wheat protein, pea protein, actin, myosin, and polypeptides, peptides, and amino acids derived thereof.

Preferably, the cheese analogue food product according to the present invention, in particular the molded cheese analogue food product, comprises proteins derived from vegetable origin.

Preferred vegetable proteins are originating from milk notably including soy milk, oat milk, almond milk, coconut milk, rice milk, pea milk, and peanut milk.

The Inventors have found that when the protein content in cheese analogue food product of the present invention, in particular in the molded cheese analogue food product, as described above, exceeds 10 wt. %, the compounding viscosity at the time of preparing the cheese analogue food product, in particular the molded cheese analogue food product increases, which makes production difficult.

### (Other)

The cheese analogue food product of the present invention, in particular the molded cheese analogue food product of the present invention, may further comprise additional ingredients such as notably thickeners, emulsifiers, antioxidants, pH adjusters, additives, and the like.

The cheese analogue food product of the present invention, in particular the molded cheese analogue food product of the present invention, may further comprise one or more thickeners.

If present, the aim is to further improve the processing features of the cheese analogue food product, in particular the molded cheese analogue food product, such as providing an improved shreddability.

Examples of thickeners notably include agar, xanthan gum, guar gum, locust bean gum, karaya gum, tragacanth gum, carrageenan, gelatin, pectin, propylene glycol alginate, and alginate

The cheese analogue food product of the present invention, in particular the molded cheese analogue food product of the present invention, may further comprise one or more emulsifiers to the extent that it does not impair the flavor.

In general, conventional emulsifiers for use in cheese making are known in the art. Examples of such emulsifiers notably include lecithin, fractions of lecithin, sucrose fatty acid ester, proprene glycol fatty acid ester, sorbitan fatty acid ester, glycerin fatty acid ester, polyglycerin fatty acid ester, polyglycerol polyricinoleate, acetic acid, various organic acid monoglycerides such as monoglyceride, tartrate monoglyceride, tartrate acetate mixed monoglyceride, citric acid monoglyceride, diacetyl tartrate monoglyceride, and lactic acid monoglyceride, and polyoxyethylene sorbitan fatty acid ester, and mixtures thereof.

The cheese analogue food product of the present invention, in particular the molded cheese analogue food product of the present invention, may further comprise antioxidants. Examples of antioxidants notably include tocopherols, carotenes, astaxanthin, polyphenols, catechin, ascorbic acid, vitamin C, rosemary extract, ascorbyl palmitate, and mixtures thereof.

The cheese analogue food product of the present invention, in particular the molded cheese analogue food product of the present invention, may further comprise pH adjusters. An example of a pH adjuster notably includes phosphates.

The cheese analogue food product of the present invention, in particular the molded cheese analogue food product of the present invention, may further comprise additives. Examples of additives notably include shelf life improving agents such as glycine, sodium acetate, and egg white lysozyme, flavors such as milk flavors and/or cheese flavors, spices, fruit purees, fruit jams, sweeteners such as sucralose, aspartame, and stevia, and colorants such as beta-carotene, paprika pigments, and annatto pigments.

The present invention also provides a method for producing the cheese analogue food product of the present invention.

It is further understood that all definitions and preferences as described above equally apply for this embodiment and all further embodiments, as described below.

For producing the cheese analogue food product of the present invention, several methods may adequately be used. The method for producing the cheese analogue food product described above preferably comprises the steps of mixing, based on the total weight of cheese analogue food product:
a) from 16 to 35 wt. %, preferably from 9 to 35 wt. %, more preferably from 19 to 30 wt. %, even more preferably from 19 to 22 wt. % of one or more starches, as detailed above;
b) from 10 to 40 wt. %, preferably from 10 to 35 wt. %, more preferably from 10 to 30 wt. %, even more preferably from 15 to 30 wt. %, most preferably from 20 to 30 wt. %. of the glyceride composition, as detailed above;
c) less than 10 wt. %, preferably less than 8 wt. % of proteins, as detailed above;
d) optionally water; and
e) optionally additional ingredients, as detailed above.

The present invention also provides a method for producing the molded cheese analogue food product of the present invention. For producing the molded cheese analogue food product of the present invention, several methods may adequately be used.

By way of example, the cheese analogue food product of the present invention, as described above, can be further pre-emulsified, homogenized, and then heat sterilized and cooled in order to form the molded cheese analogue food product.

In general, at the time of pre-emulsification, the pH is adjusted to 3.5 - 5.7 using an organic acid or an alkaline salt, but the pH can also be adjusted by lactic acid fermentation of an oil-in-water emulsion. In the case of lactic acid fermentation, a lactic acid bacterium starter is used, and the fermentation is carried out at 15 - 45 ° C until the pH reaches 3.5 - 5.7, preferably 4 - 5.5. If the pH exceeds 5.5, the shelf life tends to deteriorate, and if the pH is less than 4, the acidity is strong, and when used as a cheese analogue food product, the balance of the food as a whole becomes poor, so adjust within the above range is appropriate.

The step of heat sterilization in general has the purpose of gelatinizing the one or more starches comprised in the cheese analogue food product of the present invention, and is preferably carried out at 70 - 95 °C.

Another aspect of the present invention is to provide a cheese analogue food product comprising, based on the total weight of the cheese analogue food product,
a) from 16 to 35 wt. %, preferably from 9 to 35 wt. %, more preferably from 19 to 30 wt. %, even more preferably from 19 to 22 wt. % of one or more starches, as detailed above;
b) from 10 to 40 wt. %, preferably from 10 to 35 wt. %, more preferably from 10 to 30 wt. %, even more preferably from 15 to 30 wt. %, most preferably from 20 to 30 wt. %. of the glyceride composition, as detailed above;
c) less than 10 wt. %, preferably less than 8 wt. % of proteins, as detailed above,
d) optional water and
e) optional additional ingredients, as detailed above

wherein the glyceride composition comprises, based on the total weight of glyceride composition:
   f) less than 70 wt. % of saturated fatty acid residues (SAFA), preferably equal to or less than 65 wt. %, more preferably equal to or less than 55 wt. %, even more preferably equal to or less than 45 wt. %, most preferably equal to or less than 40 wt. %
   g) less than 5 wt. % of trans fatty acid residues (TFA), preferably equal to or less than 4.5 wt. %, more preferably equal to or less than 4 wt. %, even more preferably equal to or less than 3 wt. %, even more preferably equal to or less than 2 wt. %, most preferably equal to or less than 1 wt. %,
   h) less than 30.0 wt. % of C16:0 fatty acid residues, preferably less than 25 wt. %, more preferably less than 20 wt. %, even more preferably less than 15 wt. %, most preferably less than 10 wt. %,
   i) C8:0 and/or C10:0 and/or C18:0 fatty acid residues, in a total content of C8:0 + C10:0 + C18:0 fatty acid residues of more than 3.5 wt. %, preferably more than 5.0 wt. %, more preferably more than 10.0 wt. %, and wherein the glyceride composition has
   j) a solid fat content (SFC) at 20 °C from 5 to 50 wt. %, preferably from 15 to 45 wt. %, more preferably from 20 to 45 wt. %, the SFC value being measured according to the standard IUPAC (International Union of Pure and Applied Chemistry) 2.150 a method,
and wherein the cheese analogue food product is substantially free of animal-derived fats and oils, natural cheese and/or processed cheese, and wherein the cheese analogue food product has based on the total weight of the cheese analogue food product
   k) a SAFA content from 2.5 and 11.5 wt. %, preferably from 2.5 to 10.5 wt. % more preferably from 2.5 to 10.0 wt. %, more preferably from 2.5 to 9.5 wt. %, even more preferably from 4.5 to 10.0 wt. %, most preferably from 4.5 to 9.5 wt. %,
   l) a hardness of more than 300 g/19.6 mm² as measured at 5°C by a rheometer (a circular plunger with a diameter of 5 mm, and a table speed of 50 mm/min, Hudo Industries Ltd., Japan), preferably a hardness of more or equal more or equal than 400 g/19.6 mm², more preferably a hardness of more or equal than 600 g/19.6 mm², most preferably a hardness of more or equal than 700 g/19.6 mm² as measured at 5 °C.

### Examples

The invention will be now described in more details with reference to the following examples, whose purpose is merely illustrative and not intended to limit the scope of the invention.

All mixing ratios, contents and concentrations in this text are given in units of weight and percent by weight (wt. %) unless otherwise stated.

### Preparation of oil and fat blends within the glyceride composition comprised in the molded cheese analogue food product

The following oil and fat blends were prepared. All contents in Table 1 are given in wt. %, relative to the total weight of the respective oil and fat blend, unless stated otherwise.

**Table 1: Oil and fat blends within the glyceride composition comprised in the molded cheese analogue food product**

| | **Oils and fats blends** |
|---|---|
| Blend I | 45 wt. % high oleic sunflower oil and 55 wt. % shea stearin |
| Blend II | 48 wt. % Blend I and 52 wt. % of rapeseed oil |
| Blend III | 10 wt. % hydrogenated coconut oil and 90 wt. % rapeseed oil |
| Blend IV | 72 wt. % hydrogenated coconut oil and 28 wt. % of rapeseed oil |
| Blend V | 88 wt. % (interesterified blend of 49.8 wt. % coconut oil, 40.0 wt. % palm high melting point fraction and 10.2 wt. % hydrogenated rapeseed oil) and 12 wt. % of rapeseed oil |
| Blend VI | 92 wt. % of (interesterified oil of 49.8 wt. %coconut oil, 40.0 wt. % palm high melting point fraction, and 10.2 wt. % hydrogenated rapeseed oil) and 8 wt. % of rapeseed oil |
| Blend VII | 8.5 wt. % of hydrogenated coconut oil and 91.5 wt. % of rapeseed oil |
| Blend VIII | 70 wt. % of rapeseed oil and 30 wt. % of Blend I |
| Blend IX | 80 wt. % coconut oil and 20 wt. % rapeseed oil |
| Blend X | 80 wt. % hydrogenated coconut oil and 20 wt. % rapeseed oil |

### Example 1

Respectively, 23 wt. % of Blend I, 37 wt. % of low-fat soy milk, 11.5 wt. % of acid treated starch derived from potato or tapioca, 10.5 wt. % of acid treated starch derived from pea, 4.4 wt. % of maltodextrin, 3 wt. % of hydroxypropylated starch, 1.5 wt. % of salt, 0.2 wt. % of yeast extract, 7.8 wt. % of water, and 1.1 wt. % of a pH adjuster comprising lactic acid were heated at 55 °C for a time period of 10 minutes, and were homogenized under a pressure of 100 kg/cm². The soy milk was manufactured by Fuji Oil Co., Ltd. containing 5.3 g/100g of proteins. The starches were supplied by Nippon Starch Chemical CO., LTD. After homogenization, the oil-in-water emulsion was passed through a scraping type continuous heat exchanger, sterilized by heating at a temperature from 80 to 90 °C, subsequently filled in a pillow/loaf bag, followed by a rapid cooling step in a freezer tunnel, and then aged in a refrigerator at a temperature of 1 to 10 °C for a time period of 3 days in order to obtain a molded cheese analogue food product.

Quality evaluation was performed on the physical characteristics of the molded cheese analogue food product, its texture and mouthfeel.

The fat content of the molded cheese analogue food product is 23 wt. %, the SAFA content of the molded cheese analogue food product is 8.9 wt. %, the SAFA content of Blend I is 38.6 wt. %, and Blend I has a SFC at 20 °C of 38 wt. %.

A pH equal to 5.4 was measured and the hardness, as measured at 5 °C by a rheometer (a circular plunger with a diameter of 5 mm, and a table speed of 50 mm/min, Hudo Industries Ltd., Japan), was equal to 800 g/19.6 mm².

The mouthfeel was evaluated by a panel of five experienced and independent persons, whereby the mouthfeel covered differed aspects including meltability, hardness/softness, chewiness, crumbling, etc.

The molded cheese analogue food product showed excellent properties during further processing steps such as shredding and demonstrated a smooth texture in the mouth combined with a good flavor.

### Examples 2 - 8

In an analogous manner to Example 1, the molded cheese analogue food products of Examples 2 - 8 were prepared with the various ingredients as shown in Table 2 below.

**Table 2: Molded cheese analogue food products of Examples 1 - 8**

| | | **Example 1** | **Example 2** | **Example 3** | **Example 4** | **Example 5** | **Example 6** | **Example 7** | **Example 8** |
|---|---|---|---|---|---|---|---|---|---|
| **Ingredients** | Low fat soy milk | 37 | | 37 | 37 | 37 | 32 | 37 | 37 |
| | Oat milk | | 37 | | | | | | |
| | Blend I | 23 | 23 | | | | | | |
| | Blend II | | | 30 | 30 | | | | |
| | Blend III | | | | | 18 | 35 | | |
| | Blend IV | | | | | | | 14 | |
| | Blend V | | | | | | | | 10 |
| | Maltodextrin | 4.4 | 4.4 | | 2.8 | 12 | | 13.4 | 17.4 |
| | Salt | 1.5 | 1.5 | 1.5 | 1.5 | 1.5 | 1.5 | 1.5 | 1.5 |
| | Acid treated starch derived from pea | 10.5 | 10.5 | 10.5 | 10.5 | 10.5 | 10.5 | 10.5 | 10.5 |
| | Acid treated starch derived from potato or tapioca | 11.5 | 11.5 | 8.9 | 8.9 | 8.9 | 8.9 | 11.5 | 11.5 |
| | Hydroxypropyl modified starch derived from tapioca | 3 | 3 | 3 | | 3 | 3 | 3 | 3 |
| | Yeast extract | 0.2 | 0.2 | 0.2 | 0.2 | 0.2 | 0.2 | 0.2 | 0.2 |
| | Water | 7.8 | 7.8 | 7.8 | 7.8 | 7.8 | 7.8 | 7.8 | 7.8 |
| | pH regulator | 1.1 | 1.1 | 1.1 | 1.1 | 1.1 | 1.1 | 1.1 | 1.1 |
| | Xanthan gum | | | | 0.1 | | | | |
| | Locust bean gum | | | | 0.1 | | | | |
| **SFC and SAFA** | SFC Blend (20 °C), wt. % | 38 | 38 | 20 | 20 | 5.7 | 5.7 | 41.2 | 48.8 |
| | SAFA Blend, wt. % | 38.6 | 38.6 | 23.4 | 23.4 | 15.7 | 15.7 | 69.7 | 66.0 |
| | SAFA molded cheese analogue food product, wt. % | 8.9 | 8.9 | 7.0 | 7.0 | 2.8 | 5.5 | 9.8 | 6.6 |
| **Quality evaluation** | Hardness, g/19.6mm² | 800 | 800 | 600 | 500 | 400 | 450 | 1000 | 2000 |
| | Mouthfeel | Very Good | Very Good | Very Good | Good | Good | Good | Good | Good |

### Comparative Examples 9 - 14

In an analogous manner to Example 1, the molded cheese analogue food products of Comparative Examples 2 - 8 were prepared with the various ingredients as shown in Table 3 below.

**Table 3: Molded cheese analogue food products of Comparative Examples 9 - 14**

| | | **Comparative Example 9** | **Comparative Example 10** | **Comparative Example 11** | **Comparative Example 12** | **Comparative Example 13** | **Comparative Example 14** |
|---|---|---|---|---|---|---|---|
| **Ingredients** | Low fat soy milk | 37 | 37 | 37 | 37 | 37 | 37 |
| | Blend V | 8 | | | | | |
| | Blend VI | | 12 | | | | |
| | Blend VII | | | 30 | | | |
| | Blend VIII | | | | 14.5 | | |
| | Blend IX | | | | | 19 | |
| | Blend X | | | | | | 10.6 |
| | Maltodextrin | 19.4 | 15.4 | | 12.9 | 8.4 | 16.8 |
| | Salt | 1.5 | 1.5 | 1.5 | 1.5 | 1.5 | 1.5 |
| | Acid treated starch derived from pea | 10.5 | 10.5 | 10.5 | 10.5 | 10.5 | 10.5 |
| | Acid treated starch derived from potato or tapioca | 11.5 | 11.5 | 8.9 | 11.5 | 11.5 | 11.5 |
| | Hydroxypropyl modified starch derived from tapioca | 3 | 3 | 3 | 3 | 3 | 3 |
| | Yeast extract | 0.2 | 0.2 | 0.2 | 0.2 | 0.2 | 0.2 |
| | Water | 7.8 | 7.8 | 7.8 | 7.8 | 7.8 | 7.8 |
| | pH regulator | 1.1 | 1.1 | 1.1 | 1.1 | 1.1 | 1.1 |
| **SFC and SAFA** | SFC Blend (20 °C), wt. % | 48.8 | 51 | 4.8 | 11.4 | 34.1 | 45.8 |
| | SAFA Blend, wt. % | 66 | 68.6 | 14.4 | 16.5 | 68.6 | 76.6 |
| | SAFA molded cheese analogue food product, wt. % | 5.3 | 8.2 | 4.3 | 2.4 | 13.0 | 8.1 |
| **Quality evaluation** | Hardness, g/19.6mm² | 1500 | 1800 | 200 | 100 | 1350 | 1500 |
| | Mouthfeel | Poor | Poor | Poor to Very Poor | Poor to Very Poor | Good | Poor |

## Claims

1. A cheese analogue food product comprising, based on the total weight of the cheese analogue food product
a) from 16 to 35 percentage by weight (wt. %) of one or more starches
b) from 10 to 40 wt. % of a glyceride composition, and
c) less than 10 wt. % of proteins
wherein the glyceride composition comprises, based on the total weight of the glyceride composition:
d) less than 70 wt. % of saturated fatty acid residues (SAFA),
e) less than 5 wt. % of trans fatty acid residues (TFA);
and wherein the glyceride composition has
f) a solid fat content (SFC) at 20 °C from 5 to 50 wt. %, the SFC value being measured according to the standard IUPAC (International Union of Pure and Applied Chemistry) 2.150 a method, and
wherein the cheese analogue food product is substantially free of animal-derived fats and oils, natural cheese and/or processed cheese,
and wherein the cheese analogue food product has, based on the total weight of the cheese analogue food product, a saturated fatty acid residues (SAFA) from 2.5 to 11.5 wt. %.

2. The cheese analogue food product according to claim 1, **characterized in that** the cheese analogue food product comprises from 19 to 35 wt. % of the one or more starches, preferably from 19 to 30 wt. %, more preferably from 19 to 25 wt. %, based on the total weight of the cheese analogue food product.

3. The cheese analogue food product according to claim 1 or 2, **characterized in that** the one or more starches are selected from the group consisting of pea, potato, sweet potato, tapioca, corn, rice, and wheat.

4. The cheese analogue food product according to any one of claims 1 to 3, **characterized in that** the one or more starches are in a non-modified form and/or in a modified form.

5. The cheese analogue food product according to any one of claims 1 to 4, **characterized in that** the one or more starches are selected from the group consisting of acid treated starches, phosphorylated starches, pregelatinized starches, and hydroxypropylated starches.

6. The cheese analogue food product according to any one of claims 1 to 5, **characterized in that** the one or more starches comprises at least one acid treated starch or a combination of at least one acid treated starch and at least one hydroxypropyl modified starch.

7. The cheese analogue food product according to claim 6, **characterized in that** the content of the at least one hydroxypropyl modified starch is less or equal than 8 wt. %, preferably less or equal than 5 wt. %, more preferably less or equal than 3 wt. %, based on the total weight of cheese analogue food product.

8. The cheese analogue food product according to claim 6, **characterized in that** the acid treated starches are selected from the group consisting of pea acid treated starch, potato acid treated starch, and tapioca acid treated starch.

9. The cheese analogue food product according to claim 6 or 7, **characterized in that** the hydroxypropylated starches are selected among tapioca hydroxypropylated starch, or rice hydroxypropylated starch, or a mixture thereof.

10. The cheese analogue food product according to any one of claims 1 to 9, **characterized in that** the glyceride composition is present in an amount from 10 to 35 wt. %, preferably from 10 to 30 wt. %, more preferably from 15 to 30 wt. %, most preferably from 20 to 30 wt. %, based on the total weight of the cheese analogue food product.

11. The cheese analogue food product according to any one of claims 1 to 10, **characterized in that** the SAFA content in the glyceride composition is equal to or less than 65 wt. %, preferably equal to or less than 55 wt. %, more preferably equal to or less than 45 wt. %, most preferably equal to or less than 40 wt. %, based on the total weight of the glyceride composition.

12. The cheese analogue food product according to any one of claims 1 to 11, **characterized in that** the SAFA content in the glyceride composition is from 15 to 70 wt. %, preferably from 15 to 60 wt. %, more preferably from 15 to 50 wt. %, even more preferably from 15 to 45 wt. %, most preferably from 15 to 40 wt. %, based on the total weight of the glyceride composition.

13. The cheese analogue food product according to any one of claims 1 to 12, **characterized in that** the TFA content in the glyceride composition is equal to or less than 4.5 wt. %, preferably equal to or less than 4 wt. %, more preferably equal to or less than 3 wt. %, even more preferably equal to or less than 2 wt. %, most preferably equal to or less than 1 wt. %, based on the total weight of the glyceride composition.

14. The cheese analogue food product according to any one of claims 1 to 13, **characterized in that** the glyceride composition comprises C16:0 fatty acid residues in an amount of less than 30.0 wt. %, preferably less than 25 wt. %, more preferably less than 20 wt. %, even more preferably less than 15 wt. %, most preferably less than 10 wt. %, based on the total weight of the glyceride composition.

15. The cheese analogue food product according to any one of claims 1 to 14, **characterized in that** the glyceride composition comprises C8:0 and/or C10:0 and/or C18:0 fatty acid residues.

16. The cheese analogue food product according to claim 15, **characterized in that** the glyceride composition comprises the total content of C8:0 + C10:0 + C18:0 fatty acid residues is more than 3.5 wt. %, preferably more than 5.0 wt. %, more preferably more than 10.0 wt. %, based on the total weight of the glyceride composition.

17. The cheese analogue food product according to any one of claims 1 to 16, **characterized in that** the glyceride composition has a SFC at 20 °C from 15 to 45 wt. %, preferably from 20 to 45 wt. %, based on the total weight of the glyceride composition.

18. The cheese analogue food product according to any one of claims 1 to 17, **characterized in that** the glyceride composition comprises one or more edible fats or oils chosen among rapeseed oil and its varieties, soybean oil, sunflower oil and its varieties, cottonseed oil, peanut oil, hazelnut oil, rice bran oil, corn oil, safflower oil, linseed oil, hempseed oil, grapeseed oil, sea buckthorn oil, walnut oil, olive oil, kapoc oil, sesame oil, almond oil, avocado oil etc. evening primrose oil, shea butter, sal fat, enzymatically prepared fats, allanblackia seed oil, illipe butter, mango fat, kokum fat, cacao butter, coconut oil, palm and palm kernel oil.

19. The cheese analogue food product according to any one of claims 1 to 18, **characterized in that** the cheese analogue food product comprises less than 8 wt. % of proteins, based on the total weight of the cheese analogue food product.

20. The cheese analogue food product according to any one of claims 1 to 19, **characterized in that** the proteins are selected among proteins derived from vegetable origin.

21. The cheese analogue food product according to any one of claims 1 to 20, **characterized in that** the proteins are selected from the group consisting of soybean protein, corn protein, wheat protein, pea protein, actin, myosin, and polypeptides, peptides, and amino acids derived thereof.

22. The cheese analogue food product according to any one of claims 1 to 21, **characterized in that** the proteins are vegetable proteins originating from soy milk, oat milk, almond milk, coconut milk, rice milk, pea milk, and peanut milk.

23. The cheese analogue food product according to any one of claims 1 to 22, **characterized in that** the cheese analogue food product has a SAFA content from 2.5 to 10.5 wt. %, preferably from 2.5 to 10.0 wt. %, more preferably from 2.5 to 9.5 wt. %, even more preferably from 4.5 to 10.0 wt. %, most preferably from 4.5 to 9.5 wt. %, based on the total weight of cheese analogue food product.

24. The cheese analogue food product according to any one of claims 1 to 23, **characterized in that** the cheese analogue food product is an oil-in-water emulsion.

25. The cheese analogue food product according to any one of claims 1 to 24, **characterized in that** the cheese analogue food product comprises at least one additional ingredient selected from the group consisting of thickeners such as agar, xanthan gum, guar gum, locust bean gum, karaya gum, tragacanth gum, carrageenan, gelatin, pectin, propylene glycol alginate, and alginate; emulsifiers such as lecithin, fractions of lecithin, sucrose fatty acid ester, proprene glycol fatty acid ester, sorbitan fatty acid ester, glycerin fatty acid ester, polyglycerin fatty acid ester, polyglycerol polyricinoleate, acetic acid, various organic acid monoglycerides such as monoglyceride, tartrate monoglyceride, tartrate acetate mixed monoglyceride, citric acid monoglyceride, diacetyl tartrate monoglyceride, and lactic acid monoglyceride, and polyoxyethylene sorbitan fatty acid ester, and mixtures thereof; antioxidants such as tocopherols, carotenes, astaxanthin, polyphenols, catechin, ascorbic acid, vitamin C, rosemary extract, ascorbyl palmitate, and mixtures thereof; pH adjusters such as phosphates; and additives such as shelf life improving agents such as glycine, sodium acetate, and egg white lysozyme; flavors such as milk flavors and/or cheese flavors, spices, fruit purees, fruit jams; sweeteners such as sucralose, aspartame, and stevia; and colorants such as beta-carotene, paprika pigments, and annatto pigments.

26. A method for producing the cheese analogue food product according to any one of claims 1 to 25, **characterized in that** the method comprises the steps of mixing, based on the total weight of cheese analogue food product:
a) from 16 to 35 wt. %, preferably from 9 to 35 wt. %, more preferably from 19 to 30 wt. %, even more preferably from 19 to 22 wt. % of one or more starches;
b) from 10 to 40 wt. %, preferably from 10 to 35 wt. %, more preferably from 10 to 30 wt. %, even more preferably from 15 to 30 wt. %, most preferably from 20 to 30 wt. %. of a glyceride composition;
c) less than 10 wt. %, preferably less than 8 wt. % of proteins;
d) optionally water; and
e) optionally additional ingredients.

27. A molded cheese analogue food product obtained by molding the cheese analogue food product according to any one of claims 1 to 25.

28. The molded cheese analogue food product according to claim 27, obtained by subjecting the cheese analogue food product according to any one of claims 1 to 25 to the steps of pre-emulsification, homogenization, heat sterilization, and cooling.

29. The molded cheese analogue food product according to claim 27 or 28, **characterized in that** the molded cheese analogue food product has a hardness of more or equal than 300 g/19.6 mm² as measured at 5 °C by a rheometer (a circular plunger with a diameter of 5 mm, and a table speed of 50 mm/min, Hudo Industries Ltd., JAPAN), preferably more or equal than 400 g/19.6 mm², more preferably more or equal than 600 g/19.6 mm², most preferably more or equal than 700 g/19.6 mm².

30. The molded cheese analogue food product according to any one of claims 27 to 29, **characterized in that** the molded cheese analogue food product has a hardness from 300 to 2000 g/19.6 mm² as measured at 5 °C by a rheometer (a circular plunger with a diameter of 5 mm, and a table speed of 50 mm/min, Hudo Industries Ltd., JAPAN), preferably from 400 to 2000 g/19.6 mm², more preferably from 600 to 2000 g/19.6 mm², most preferably from 700 to 2000 g/19.6 mm².

31. Use of the cheese analogue food product according to any one of claims 1 to 25 for the manufacturing of a molded cheese analogue food product.

## Patentansprüche

1. Ein Käseanalognahrungsmittelprodukt, welches, basierend auf dem Gesamtgewicht des Käseanalognahrungsmittelprodukts, Folgendes umfasst:
a) 16 bis 35 Gewichtsprozent (Gew.-%) einer oder mehrerer Stärken
b) 10 bis 40 Gew.-% einer Glyceridzusammensetzung, und
c) weniger als 10 Gew.-% Proteine
wobei die Glyceridzusammensetzung, basierend auf dem Gesamtgewicht der Glyceridzusammensetzung, Folgendes umfasst:
d) weniger als 70 Gew.-% gesättigte Fettsäurereste (SAFA),
e) weniger als 5 Gew.-% trans-Fettsäurereste (TFA);
und wobei die Glyceridzusammensetzung
f) einen Festfettgehalt (SFC) bei 20 °C von 5 bis 50 Gew.-% hat, wobei der SFC-Gehalt gemäß dem Standard-IUPAC- (Internationale Union für reine und angewandte Chemie) 2.150a-Verfahren gemessen wird, und
wobei das Käseanalognahrungsmittelprodukt im Wesentlichen frei von tierischen Fetten und Ölen, natürlichem Käse und/oder Schmelzkäse ist,
und wobei das Käseanalognahrungsmittelprodukt, basierend auf dem Gesamtgewicht des Käseanalognahrungsmittelprodukts, einen Gehalt von gesättigten Fettsäureresten (SAFA) von 2,5 bis 11,5 Gew.-% hat.

2. Das Käseanalognahrungsmittelprodukt nach Anspruch 1, **dadurch gekennzeichnet, dass** das Käseanalognahrungsmittelprodukt 19 bis 35 Gew.-% der einen oder mehreren Stärken umfasst, bevorzugt 19 bis 30 Gew.-%, noch besser 19 bis 25 Gew.-%, basierend auf dem Gesamtgewicht des Käseanalognahrungsmittelprodukts.

3. Das Käseanalognahrungsmittelprodukt nach Anspruch 1 oder 2, **dadurch gekennzeichnet, dass** die eine oder mehreren Stärken ausgewählt sind aus der Gruppe bestehend aus Erbse, Kartoffel, Süßkartoffel, Tapioka, Mais, Reis, und Weizen.

4. Das Käseanalognahrungsmittelprodukt nach irgendeinem der Ansprüche 1 bis 3, **dadurch gekennzeichnet, dass** die eine oder mehreren Stärken in einer nichtmodifizierten und/oder in einer modifizierten Form vorliegen.

5. Das Käseanalognahrungsmittelprodukt nach irgendeinem der Ansprüche 1 bis 4, **dadurch gekennzeichnet, dass** die eine oder mehreren Stärken ausgewählt sind aus der Gruppe bestehend aus säurebehandelten Stärken, phosphorylierten Stärken, Quellstärken und hydroxypropylierten Stärken.

6. Das Käseanalognahrungsmittelprodukt nach irgendeinem der Ansprüche 1 bis 5, **dadurch gekennzeichnet, dass** die eine oder mehreren Stärken zumindest eine säurebehandelte Stärke oder eine Kombination von zumindest einer säurebehandelten Stärke und zumindest einer hydroxypropyl-modifizierten Stärke umfasst.

7. Das Käseanalognahrungsmittelprodukt nach Anspruch 6, **dadurch gekennzeichnet, dass** der Gehalt der zumindest einen hydroxypropyl-modifizierten Stärke, basierend auf dem Gesamtgewicht des Käseanalognahrungsmittelprodukts, kleiner als oder gleich 8 Gew.-%, bevorzugt kleiner als oder gleich 5 Gew.-%, noch besser kleiner als oder gleich 3 Gew.-% ist.

8. Das Käseanalognahrungsmittelprodukt nach Anspruch 6, **dadurch gekennzeichnet, dass** die säurebehandelten Stärken ausgewählt sind aus der Gruppe bestehend aus säurebehandelter Erbsenstärke, säurebehandelter Kartoffelstärke und säurebehandelter Tapiokastärke.

9. Das Käseanalognahrungsmittelprodukt nach Anspruch 6 oder 7, **dadurch gekennzeichnet, dass** die hydroxypropylierten Stärken ausgewählt sind aus hydroxypropylierter Tapiokastärke, oder hydroxypropylierter Reisstärke, oder einer Mischung davon.

10. Das Käseanalognahrungsmittelprodukt nach irgendeinem der Ansprüche 1 bis 9, **dadurch gekennzeichnet, dass** die Glyceridzusammensetzung, basierend auf dem Gesamtgewicht des Käseanalognahrungsmittelprodukts, in einer Menge von 10 bis 35 Gew.-%, bevorzugt von 10 bis 30 Gew.-%, noch besser von 15 bis 30 Gew.-%, am besten von 20 bis 30 Gew.-% anwesend ist.

11. Das Käseanalognahrungsmittelprodukt nach irgendeinem der Ansprüche 1 bis 10, **dadurch gekennzeichnet, dass** der SAFA-Gehalt in der Glyceridzusammensetzung, basierend auf dem Gesamtgewicht der Glyceridzusammensetzung, gleich oder kleiner als 65 Gew.-%, bevorzugt gleich oder kleiner als 55 Gew.-%, noch besser gleich oder kleiner als 45 Gew.-%, am besten gleich oder kleiner als 40 Gew.-% ist.

12. Das Käseanalognahrungsmittelprodukt nach irgendeinem der Ansprüche 1 bis 11, **dadurch gekennzeichnet, dass** der SAFA-Gehalt in der Glyceridzusammensetzung, basierend auf dem Gesamtgewicht des Glyceridzusammensetzung, von 15 bis 70 Gew.-%, bevorzugt von 15 bis 60 Gew.-%, noch besser von 15 bis 50 Gew.-%, noch besser sogar von 15 bis 45 Gew.-%, am besten von 15 bis 40 Gew.-% ist.

13. Das Käseanalognahrungsmittelprodukt nach irgendeinem der Ansprüche 1 bis 12, **dadurch gekennzeichnet, dass** der TFA-Gehalt in der Glyceridzusammensetzung, basierend auf dem Gesamtgewicht der Glyceridzusammensetzung, gleich oder kleiner als 4,5 Gew.-%, bevorzugt gleich oder kleiner als 4 Gew.-%, noch besser gleich oder kleiner als 3 Gew.-%, noch besser sogar gleich oder kleiner als 2 Gew.-%, am besten gleich oder kleiner als 1 Gew.-% ist.

14. Das Käseanalognahrungsmittelprodukt nach irgendeinem der Ansprüche 1 bis 13, **dadurch gekennzeichnet, dass** die Glyceridzusammensetzung C16:0-Fettsäurereste, basierend auf dem Gesamtgewicht der Glyceridzusammensetzung, in einer Menge von weniger als 30,0 Gew.-%, bevorzugt weniger als 25 Gew.-%, noch besser weniger als 20 Gew.-%, noch besser sogar weniger als 15 Gew.-%, am besten weniger als 10 Gew.-% umfasst.

15. Das Käseanalognahrungsmittelprodukt nach irgendeinem der Ansprüche 1 bis 14, **dadurch gekennzeichnet, dass** die Glyceridzusammensetzung C8:0- und/oder C10:0- und/oder C18:0-Fettsäurereste umfasst.

16. Das Käseanalognahrungsmittelprodukt nach Anspruch 15, **dadurch gekennzeichnet, dass** die Glyceridzusammensetzung den Gesamtgehalt von C8:0-+ C10:0- + C18:0-Fettsäureresten, basierend auf dem Gesamtgewicht der Glyceridzusammensetzung, in einer Menge von mehr als 3,5 Gew.-%, bevorzugt mehr als 5,0 Gew.-%, noch besser mehr als 10,0 Gew.-% umfasst.

17. Das Käseanalognahrungsmittelprodukt nach irgendeinem der Ansprüche 1 bis 16, **dadurch gekennzeichnet, dass** die Glyceridzusammensetzung, basierend auf dem Gesamtgewicht der Glyceridzusammensetzung, einen SFC bei 20°C von 15 bis 45 Gew.-%, bevorzugt von 20 bis 45 Gew.-% hat.

18. Das Käseanalognahrungsmittelprodukt nach irgendeinem der Ansprüche 1 bis 17, **dadurch gekennzeichnet, dass** die Glyceridzusammensetzung ein oder mehrere Speisefette oder -öle ausgewählt aus Rapsöl und seinen Sorten, Sojabohnenöl, Sonnenblumenöl und seinen Sorten, Baumwollsamenöl, Erdnussöl, Haselnussöl, Reiskleieöl, Maisöl, Distelöl, Leinöl, Hanfsamenöl, Traubenkernöl, Sanddornöl, Walnussöl, Olivenöl, Kapoköl, Sesamöl, Mandelöl, Avocadoöl usw., Nachtkerzenöl, Sheabutter, Salfett, enzymatisch aufbereiteten Fetten, Allanblackia-Samenöl, Illipebutter, Mangofett, Kokumfett, Kakaobutter, Kokosöl, Palm- und Palmkernöl umfasst.

19. Das Käseanalognahrungsmittelprodukt nach irgendeinem der Ansprüche 1 bis 18, **dadurch gekennzeichnet, dass** das Käseanalognahrungsmittelprodukt, basierend auf dem Gesamtgewicht des Käseanalognahrungsmittelprodukts, weniger als 8 Gew.-% Proteine umfasst.

20. Das Käseanalognahrungsmittelprodukt nach irgendeinem der Ansprüche 1 bis 19, **dadurch gekennzeichnet, dass** die Proteine ausgewählt sind aus Proteinen pflanzlicher Herkunft.

21. Das Käseanalognahrungsmittelprodukt nach irgendeinem der Ansprüche 1 bis 20, **dadurch gekennzeichnet, dass** die Proteine ausgewählt sind aus der Gruppe bestehend aus Sojabohnenprotein, Maisprotein, Weizenprotein, Erbsenprotein, Aktin, Myosin, und davon abgeleiteten Polypeptiden, Peptiden und Aminosäuren.

22. Das Käseanalognahrungsmittelprodukt nach irgendeinem der Ansprüche 1 bis 21, **dadurch gekennzeichnet, dass** die Proteine pflanzliche Proteine stammend von Sojamilch, Hafermilch, Mandelmilch, Kokosmilch, Reismilch, Erbsenmilch, und Erdnussmilch sind.

23. Das Käseanalognahrungsmittelprodukt nach irgendeinem der Ansprüche 1 bis 22, **dadurch gekennzeichnet, dass** das Käseanalognahrungsmittelprodukt einen SAFA-Gehalt, basierend auf dem Gesamtgewicht des Käseanalognahrungsmittelprodukts, von 2,5 bis 10,5 Gew.-%, bevorzugt von 2,5 bis 10,0 Gew.-%, noch besser von 2,5 bis 9,5 Gew.-%, noch besser sogar von 4,5 bis 10,0 Gew.-%, am besten von 4,5 bis 9,5 Gew.-% hat.

24. Das Käseanalognahrungsmittelprodukt nach irgendeinem der Ansprüche 1 bis 23, **dadurch gekennzeichnet, dass** das Käseanalognahrungsmittelprodukt eine Öl-in-Wasser-Emulsion ist.

25. Das Käseanalognahrungsmittelprodukt nach irgendeinem der Ansprüche 1 bis 24, **dadurch gekennzeichnet, dass** das Käseanalognahrungsmittelprodukt zumindest einen zusätzlichen Inhaltsstoff ausgewählt aus der Gruppe bestehend aus Verdickungsmitteln wie Agar, Xanthangummi, Guargummi, Johannisbrotgummi, Karayagummi, Tragantgummi, Carrageen, Gelatine, Pektin, Propylenglykolalginat, und Alginat; Emulgiermitteln wie Lecithin, Lecithinfraktionen, Saccharose-Fettsäureester, Proprenglykol-Fettsäureester, Sorbitan-Fettsäureester, Glycerin-Fettsäureester, Polyglycerin-Fettsäureester, Polyglycerin-Polyricinoleat, Essigsäure, verschiedene organische Säuremonoglyceride wie Monoglycerid, Tartrat-Monoglycerid, Tartratacetat-gemischtes Monoglycerid, Zitronensäure-Monoglycerid, Diacetyltartrat-Monoglycerid, und Milchsäure-Monoglycerid, und Polyoxyethylensorbitan-Fettsäureester, und Mischungen davon; Antioxidanzien wie Tocopherole, Carotine, Astaxanthin, Polyphenole, Catechin, Ascorbinsäure, Vitamin C, Rosmarinextrakt, Ascorbylpalmitat, und Mischungen davon; pH-Einstellmitteln wie Phosphate; und Zusätzen wie die Haltbarkeit verlängernde Mittel wie Glycin, Natriumacetat, und Eiweißlysozym; Geschmacksstoffen wie Milcharomen und/oder Käsearomen, Gewürzen, Fruchtpürees, Fruchtmarmeladen; Süßstoffen wie Sucralose, Aspartam, und Stevia; und Farbstoffen wie Betacarotin, Paprikapigmente, und Annattopigmente umfasst.

26. Ein Verfahren zur Herstellung des Käseanalognahrungsmittelprodukts nach irgendeinem der Ansprüche 1 bis 25, **dadurch gekennzeichnet, dass** das Verfahren die folgenden Schritte des Mischens, basierend auf dem Gesamtgewicht des Käseanalognahrungsmittelprodukts, umfasst:
a) von 16 bis 35 Gew.-%, bevorzugt von 9 bis 35 Gew.-%, noch besser von 19 bis 30 Gew.-%, noch besser sogar von 19 bis 22 Gew.-% einer oder mehrerer Stärken;
b) von 10 bis 40 Gew.-%, bevorzugt von 10 bis 35 Gew.-%, noch besser von 10 bis 30 Gew.-%, noch besser sogar von 15 bis 30 Gew.-%, am besten von 20 bis 30 Gew.-% einer Glyceridzusammensetzung;
c) weniger als 10 Gew.-%, bevorzugt weniger als 8 Gew.-% Proteine;
d) optional Wasser; und
e) optional zusätzliche Inhaltsstoffe.

27. Ein geformtes Käseanalognahrungsmittelprodukt, erhalten durch Formen des Käseanalognahrungsmittelprodukts nach irgendeinem der Ansprüche 1 bis 25.

28. Das geformte Käseanalognahrungsmittelprodukt nach Anspruch 27, erhalten durch Unterziehen des Käseanalognahrungsmittelprodukts nach irgendeinem der Ansprüche 1 bis 25 den Schritten des Voremulgierens, Homogenisierens, Hitzesterilisierens, und Kühlens.

29. Das geformte Käseanalognahrungsmittelprodukt nach Anspruch 27 oder 28, **dadurch gekennzeichnet, dass** das geformte Käseanalognahrungsmittelprodukt eine Härte von mehr als oder gleich 300 g/19,6 mm² hat, wie gemessen bei 5 °C durch ein Rheometer (ein runder Druckkolben mit einem Durchmesser von 5 mm, und einer Tischgeschwindigkeit von 50 mm/min, Hudo Industries Ltd., JAPAN), bevorzugt mehr als oder gleich 400 g/19,6 mm², noch besser mehr als oder gleich 600 g/19,6 mm², am besten mehr als oder gleich 700 g/19,6 mm².

30. Das geformte Käseanalognahrungsmittelprodukt nach irgendeinem der Ansprüche 27 bis 29, **dadurch gekennzeichnet, dass** das geformte Käseanalognahrungsmittelprodukt eine Härte von 300 bis 2.000 g/19,6 mm² hat, wie gemessen bei 5 °C durch ein Rheometer (ein runder Druckkolben mit einem Durchmesser von 5 mm, und einer Tischgeschwindigkeit von 50 mm/min, Hudo Industries Ltd., JAPAN), bevorzugt von 400 bis 2.000 g/19,6 mm², noch besser von 600 bis 2.000 g/19,6 mm², am besten von 700 bis 2.000 g/19,6 mm².

31. Verwendung des Käseanalognahrungsmittelprodukts nach irgendeinem der Ansprüche 1 bis 25 zur Herstellung eines geformten Käseanalognahrungsmittelprodukts.

## Revendications

1. Produit alimentaire analogue au fromage comprenant, sur la base du poids total du produit alimentaire analogue au fromage,
a) de 16 à 35 pour cent en poids (% en poids) d'un ou plusieurs amidons
b) de 10 à 40 % en poids d'une composition de glycérides, et
c) moins de 10 % en poids de protéines
dans lequel la composition de glycérides comprend, sur la base du poids total de la composition de glycérides :
d) moins de 70 % en poids de résidus d'acides gras saturés (SAFA),
e) moins de 5 % en poids de résidus d'acides gras trans (TFA) ;
et dans lequel la composition de glycérides présente
f) une teneur en graisses solides (SFC) à 20 °C de 5 à 50 % en poids, la valeur SFC étant mesurée selon la méthode standard de l'IUPAC (Union internationale de chimie pure et appliquée) 2.150 a, et
dans lequel le produit alimentaire analogue au fromage est sensiblement dépourvu de graisses et d'huiles d'origine animale, de fromage naturel et/ou de fromage fondu,
et dans lequel le produit alimentaire analogue au fromage présente, sur la base du poids total du produit alimentaire analogue au fromage, des résidus d'acides gras saturés (SAFA) de 2,5 à 11,5 % en poids.

2. Produit alimentaire analogue au fromage selon la revendication 1, **caractérisé en ce que** le produit alimentaire analogue au fromage comprend de 19 à 35 % en poids des un ou plusieurs amidons, de préférence de 19 à 30 % en poids, plus préférentiellement de 19 à 25 % en poids, sur la base du poids total du produit alimentaire analogue au fromage.

3. Produit alimentaire analogue au fromage selon la revendication 1 ou 2, **caractérisé en ce que** les un ou plusieurs amidons sont choisis parmi le groupe consistant en le pois, la pomme de terre, la patate douce, le tapioca, le maïs, le riz et le blé.

4. Produit alimentaire analogue au fromage selon l'une quelconque des revendications 1 à 3, **caractérisé en ce que** les un ou plusieurs amidons se présentent sous une forme non modifiée et/ou sous une forme modifiée.

5. Produit alimentaire analogue au fromage selon l'une quelconque des revendications 1 à 4, **caractérisé en ce que** les un ou plusieurs amidons sont choisis parmi le groupe consistant en les amidons traités à l'acide, les amidons phosphorylés, les amidons prégélatinisés et les amidons hydroxypropylés.

6. Produit alimentaire analogue au fromage selon l'une quelconque des revendications 1 à 5, **caractérisé en ce que** les un ou plusieurs amidons comprennent au moins un amidon traité à l'acide ou une combinaison d'au moins un amidon traité à l'acide et d'au moins un amidon modifié hydroxypropylé.

7. Produit alimentaire analogue au fromage selon la revendication 6, **caractérisé en ce que** la teneur en le au moins un amidon modifié hydroxypropylé est inférieure ou égale à 8 % en poids, de préférence inférieure ou égale à 5 % en poids, plus préférentiellement inférieure ou égale à 3 % en poids, sur la base du poids total du produit alimentaire analogue au fromage.

8. Produit alimentaire analogue au fromage selon la revendication 6, **caractérisé en ce que** les amidons traités à l'acide sont choisis parmi le groupe consistant en un amidon de pois traité à l'acide, un amidon de pomme de terre traité à l'acide et un amidon de tapioca traité à l'acide.

9. Produit alimentaire analogue au fromage selon la revendication 6 ou 7, **caractérisé en ce que** les amidons hydroxypropylés sont choisis parmi l'amidon de tapioca hydroxypropylé, ou l'amidon de riz hydroxypropylé, ou un mélange de ceux-ci.

10. Produit alimentaire analogue au fromage selon l'une quelconque des revendications 1 à 9, **caractérisé en ce que** la composition de glycérides est présente en une quantité de 10 à 35 % en poids, de préférence de 10 à 30 % en poids, plus préférentiellement de 15 à 30 % en poids, le plus préférentiellement de 20 à 30 % en poids, sur la base du poids total du produit alimentaire analogue au fromage.

11. Produit alimentaire analogue au fromage selon l'une quelconque des revendications 1 à 10, **caractérisé en ce que** la teneur en SAFA dans la composition de glycérides est inférieure ou égale à 65 % en poids, de préférence inférieure ou égale à 55 % en poids, plus préférentiellement inférieure ou égale à 45 % en poids, le plus préférentiellement inférieure ou égale à 40 % en poids, sur la base du poids total de la composition de glycérides.

12. Produit alimentaire analogue au fromage selon l'une quelconque des revendications 1 à 11, **caractérisé en ce que** la teneur en SAFA dans la composition de glycérides est de 15 à 70 % en poids, de préférence de 15 à 60 % en poids, plus préférentiellement de 15 à 50 % en poids, encore plus préférentiellement de 15 à 45 % en poids, le plus préférentiellement de 15 à 40 % en poids, sur la base du poids total de la composition de glycérides.

13. Produit alimentaire analogue au fromage selon l'une quelconque des revendications 1 à 12, **caractérisé en ce que** la teneur en TFA dans la composition de glycérides est inférieure ou égale à 4,5 % en poids, de préférence inférieure ou égale à 4 % en poids, plus préférentiellement inférieure ou égale à 3 % en poids, encore plus préférentiellement inférieure ou égale à 2 % en poids, le plus préférentiellement inférieure ou égale à 1 % en poids, sur la base du poids total de la composition de glycérides.

14. Produit alimentaire analogue au fromage selon l'une quelconque des revendications 1 à 13, **caractérisé en ce que** la composition de glycérides comprend des résidus d'acides gras C16:0 en une quantité inférieure à 30,0 % en poids, de préférence inférieure à 25 % en poids, plus préférentiellement inférieure à 20 % en poids, encore plus préférentiellement inférieure à 15 % en poids, le plus préférentiellement inférieure à 10 % en poids, sur la base du poids total de la composition de glycérides.

15. Produit alimentaire analogue au fromage selon l'une quelconque des revendications 1 à 14, **caractérisé en ce que** la composition de glycérides comprend des résidus d'acides gras C8:0 et/ou C10:0 et/ou C18:0.

16. Produit alimentaire analogue au fromage selon la revendication 15, **caractérisé en ce que** la composition de glycérides comprend la teneur totale en résidus d'acides gras C8:0 + C10:0 + C18:0 qui est supérieure à 3,5 % en poids, de préférence supérieure à 5,0 % en poids, plus préférentiellement supérieure à 10,0 % en poids, sur la base du poids total de la composition de glycérides.

17. Produit alimentaire analogue au fromage selon l'une quelconque des revendications 1 à 16, **caractérisé en ce que** la composition de glycérides présente une SFC à 20 °C de 15 à 45 % en poids, de préférence de 20 à 45 % en poids, sur la base du poids total de la composition de glycérides.

18. Produit alimentaire analogue au fromage selon l'une quelconque des revendications 1 à 17, **caractérisé en ce que** la composition de glycérides comprend une ou plusieurs graisses ou huiles comestibles choisies parmi l'huile de colza et ses variétés, l'huile de soja, l'huile de tournesol et ses variétés, l'huile de coton, l'huile d'arachide, l'huile de noisette, l'huile de son de riz, l'huile de maïs, l'huile de carthame, l'huile de lin, l'huile de chanvre, l'huile de pépins de raisin, l'huile d'argousier, l'huile de noix, l'huile d'olive, l'huile de kapok, l'huile de sésame, l'huile d'amande, l'huile d'avocat, etc. l'huile d'onagre, le beurre de karité, la graisse de sal, les graisses préparées par voie enzymatique, l'huile de graines d'allanblackia, le beurre d'illipé, la graisse de mangue, la graisse de kokum, le beurre de cacao, l'huile de coco, l'huile de palme et de palmiste.

19. Produit alimentaire analogue au fromage selon l'une quelconque des revendications 1 à 18, **caractérisé en ce que** le produit alimentaire analogue au fromage comprend moins de 8 % en poids de protéines, sur la base du poids total du produit alimentaire analogue au fromage.

20. Produit alimentaire analogue du fromage selon l'une quelconque des revendications 1 à 19, **caractérisé en ce que** les protéines sont choisies parmi les protéines issues d'origine végétale.

21. Produit alimentaire analogue au fromage selon l'une quelconque des revendications 1 à 20, **caractérisé en ce que** les protéines sont choisies parmi le groupe consistant en la protéine de soja, la protéine de maïs, la protéine de blé, la protéine de pois, l'actine, la myosine et les polypeptides, les peptides et les acides aminés dérivés de celles-ci.

22. Produit alimentaire analogue au fromage selon l'une quelconque des revendications 1 à 21, **caractérisé en ce que** les protéines sont des protéines végétales provenant du lait de soja, du lait d'avoine, du lait d'amande, du lait de coco, du lait de riz, du lait de pois et du lait d'arachide.

23. Produit alimentaire analogue au fromage selon l'une quelconque des revendications 1 à 22, **caractérisé en ce que** le produit alimentaire analogue au fromage présente une teneur en SAFA de 2,5 à 10,5 % en poids, de préférence de 2,5 à 10,0 % en poids, plus préférentiellement de 2,5 à 9,5 % en poids, encore plus préférentiellement de 4,5 à 10,0 % en poids, le plus préférentiellement de 4,5 à 9,5 % en poids, sur la base du poids total du produit alimentaire analogue au fromage.

24. Produit alimentaire analogue au fromage selon l'une quelconque des revendications 1 à 23, **caractérisé en ce que** le produit alimentaire analogue au fromage est une émulsion huile dans l'eau.

25. Produit alimentaire analogue au fromage selon l'une quelconque des revendications 1 à 24, **caractérisé en ce que** le produit alimentaire analogue au fromage comprend au moins un ingrédient supplémentaire choisi parmi le groupe consistant en les épaississants tels que l'agar, la gomme xanthane, la gomme guar, la gomme de caroube, la gomme karaya, la gomme adragante, la carraghénane, la gélatine, la pectine, l'alginate de propylène glycol et l'alginate ; les émulsifiants tels que la lécithine, les fractions de lécithine, l'ester d'acide gras de saccharose, l'ester d'acide gras de proprène glycol, l'ester d'acide gras de sorbitan, l'ester d'acide gras de glycérine, l'ester d'acide gras de polyglycérine, le polyricinoléate de polyglycérol, l'acide acétique, divers monoglycérides d'acides organiques tels qu'un monoglycéride, un monoglycéride de tartrate, un monoglycéride mélangé à l'acétate de tartrate, un monoglycéride d'acide citrique, un monoglycéride de tartrate de diacétyle et un monoglycéride d'acide lactique, et un ester d'acide gras de polyoxyéthylène sorbitan, et des mélanges de ceux-ci ; les antioxydants tels que les tocophérols, les carotènes, l'astaxanthine, les polyphénols, la catéchine, l'acide ascorbique, la vitamine C, l'extrait de romarin, le palmitate d'ascorbyle et des mélanges de ceux-ci ; les régulateurs de pH tels que des phosphates ; et les additifs tels que des agents améliorant la durée de conservation tels que la glycine, l'acétate de sodium et le lysozyme de blanc d'oeuf ; les arômes tels que les arômes de lait et/ou les arômes de fromages, les épices, les purées de fruits, les confitures de fruits ; les édulcorants tels que le sucralose, l'aspartame et la stévia ; et les colorants tels que le bêtacarotène, les pigments de paprika et les pigments de rocou.

26. Procédé de production du produit alimentaire analogue au fromage selon l'une quelconque des revendications 1 à 25, **caractérisé en ce que** le procédé comprend les étapes de mélange, sur la base du poids total du produit alimentaire analogue au fromage :
a) de 16 à 35 % en poids, de préférence de 9 à 35 % en poids, plus préférentiellement de 19 à 30 % en poids, encore plus préférentiellement de 19 à 22 % en poids d'un ou plusieurs amidons ;
b) de 10 à 40 % en poids, de préférence de 10 à 35 % en poids, plus préférentiellement de 10 à 30 % en poids, encore plus préférentiellement de 15 à 30 % en poids, le plus préférentiellement de 20 à 30 % en poids d'une composition de glycérides ;
c) moins de 10 % en poids, de préférence moins de 8 % en poids de protéines ;
d) facultativement de l'eau ; et
e) facultativement des ingrédients supplémentaires.

27. Produit alimentaire moulé analogue au fromage obtenu par moulage du produit alimentaire analogue au fromage selon l'une quelconque des revendications 1 à 25.

28. Produit alimentaire moulé analogue au fromage selon la revendication 27, obtenu en soumettant le produit alimentaire analogue au fromage selon l'une quelconque des revendications 1 à 25 aux étapes de pré-émulsification, d'homogénéisation, de stérilisation thermique et de refroidissement.

29. Produit alimentaire moulé analogue au fromage selon la revendication 27 ou 28, **caractérisé en ce que** le produit alimentaire moulé analogue au fromage présente une dureté supérieure ou égale à 300 g/19,6 mm² telle que mesurée à 5 °C par un rhéomètre (un piston circulaire d'un diamètre de 5 mm et une vitesse de table de 50 mm/min, Hudo Industries Ltd., JAPON), de préférence supérieure ou égale à 400 g/19,6 mm², plus préférentiellement supérieure ou égale à 600 g/19,6 mm², le plus préférentiellement supérieure ou égale à 700 g/19,6 mm².

30. Produit alimentaire moulé analogue au fromage selon l'une quelconque des revendications 27 à 29, **caractérisé en ce que** le produit alimentaire moulé analogue au fromage présente une dureté de 300 à 2000 g/19,6 mm² telle que mesurée à 5 °C par un rhéomètre (un piston circulaire d'un diamètre de 5 mm et une vitesse de table de 50 mm/min, Hudo Industries Ltd., JAPON), de préférence de 400 à 2000 g/19,6 mm², plus préférentiellement de 600 à 2000 g/19,6 mm², le plus préférentiellement de 700 à 2000 g/19,6 mm².

31. Utilisation du produit alimentaire analogue au fromage selon l'une quelconque des revendications 1 à 25 pour la fabrication d'un produit alimentaire moulé analogue au fromage.
